# EUROPÄISCHE PATENTSCHRIFT

(11) **EP 2 430 682 B1**
(45) Veröffentlichungstag und Bekanntmachung des Hinweises auf die Patenterteilung: **26.06.2013**
(21) Anmeldenummer: 10720296.2
(22) Anmeldetag: 11.05.2010
(51) Int. Cl.: H01M 2/10, H01M 10/04, H01M 10/50, H01M 2/12

(54) **BATTERIEEINHEIT**
BATTERY UNIT
UNITÉ DE BATTERIE

(30) Priorität: 11.05.2009 DE 102009020787
(43) Veröffentlichungstag der Anmeldung: 21.03.2012
(73) Patentinhaber: MAGNA STEYR Battery Systems GmbH & Co OG, 8141 Zettling (AT)
(72) Erfinder: THALER, Alex, A-8042 Graz (AT); WÜNSCHE, Ralph, A-8010 Graz (AT)
(74) Vertreter: Rausch, Gabriele
(86) Internationale Anmeldenummer: PCT/EP2010/056506
(87) Internationale Veröffentlichungsnummer: WO 2010/130760

(56) Entgegenhaltungen:
- DE-A1-102007 050 400
- DE-A1-102008 016 936

## Beschreibung

Die vorliegende Erfindung betrifft eine Batterieeinheit mit einem Stapel flacher Zellen, zwischen denen Kühlbleche liegen, die zumindest einen abgewinkelten Rand aufweisen.

Eine derartige Batterieeinheit ist beispielsweise aus der DE 10 2008 016 936 A2 bekannt. Die Ränder der Kühlbleche sind dort um 90° abgewinkelt, um die Zellen formschlüssig zu umfassen und dadurch eine Anbindung für eine Wärmesenke bereitzustellen.

DE 10 2007 050400 A1 offenbart ebenfalls eine Batterieeinheit mit kühlblechen.

Bei Batterieeinheiten dieser Art kann es durch Überhitzung, elektrische Kurzschlüsse oder andere Zwischenfälle zu einem Überdruck in den Zellen kommen, welcher die Zellen zum Platzen bringt und das in der Zelle entstandene Gas austreten läßt. Es kann dabei sogar zu Flammenbildungen kommen. Treffen die Flammen auf eine benachbarte Zelle, so kann diese ebenfalls überhitzen, mit der Folge einer Kettenreaktion, die ein großes Sicherheitsrisiko darstellt.

Die Erfindung setzt sich zum Ziel, eine Batterieeinheit zu schaffen, bei welcher die Zellen vor Gasaustritt und Flammenbildung besser geschützt sind.

Dieses Ziel wird mit einer Batterieeinheit der einleitend genannten Art erreicht, die sich gemäß der Erfindung dadurch auszeichnet, daß die Ränder benachbarter Kühlbleche in dieselbe Richtung und einander teilweise überlappend abgewinkelt sind, um zwischeneinander in diese Richtung gerichtete Düsenspalte zu bilden.

Auf diese Weise wird allfälliges aus einer Zelle austretendes Gas zur Seite hin abgelenkt und an den benachbarten - und allfälligen gegenüberliegenden - Zellen vorbeigelenkt, sodaß diese vor den Gasen oder Flammen einer einzelnen schadhaften Zelle geschützt sind. Dadurch wird die Gefahr einer Kettenreaktion hintangehalten und im Ergebnis mit kostengünstigen Mitteln eine Batterieeinheit mit wesentlich erhöhter Sicherheit geschaffen.

Der Winkel der Abwinkelung ist bevorzugt größer gleich 45° und kleiner als 90°, besonders bevorzugt etwa 70° bis 85°, um einen so weit wie möglich seitwärts gerichteten Düsenspalt zu bilden.

Wenn die Batterieeinheit zumindest zwei benachbarte Stapeln von Zellen besitzt, sind einander in der Batterieeinheit gegenüberliegende Ränder etwa in dieselbe Richtung, insbesondere in die räumlich gesehen selbe Richtung, abgewinkelt, um den jeweils gegenüberliegenden Stapel zu schützen. Nach einer besonderen Ausführungsform der Erfindung sind, wenn die Batterieeinheit zumindest zwei benachbarte Stapeln von Zellen besitzt, einander in der Batterieeinheit gegenüberliegende Ränder etwa auf dieselbe Seite abgewinkelt bzw. in etwa spiegelsymmetrisch ausgerichtet sind, um den jeweils gegenüberliegenden Stapel zu schützen.

Die erfindungsgemäße Randgestaltung schafft darüber hinaus die Möglichkeit, gemäß einem weiteren bevorzugten Merkmal der Erfindung die Kühlbleche in dem an ihren Rand anschließenden Bereich gewellt auszubilden, um die Zellen gegen ein Verrutschen zum Rand hin zu sichern.

Die Erfindung wird nachstehend anhand eines in den beigeschlossenen Zeichnungen dargestellten Ausführungsbeispiels näher erläutert. In den Zeichnungen zeigt
Fig. 1 eine Batterieeinheit der Erfindung mit einem Zellenstapel in einer Perspektivansicht;
Fig. 2 den Randbereich des Zellenstapels von Fig. 1 in der Draufsicht; und
Fig. 3 die Randbereiche einer Batterieeinheit zweier gegenüberliegender Stapel mit mehreren Zellenstapeln in der Draufsicht.

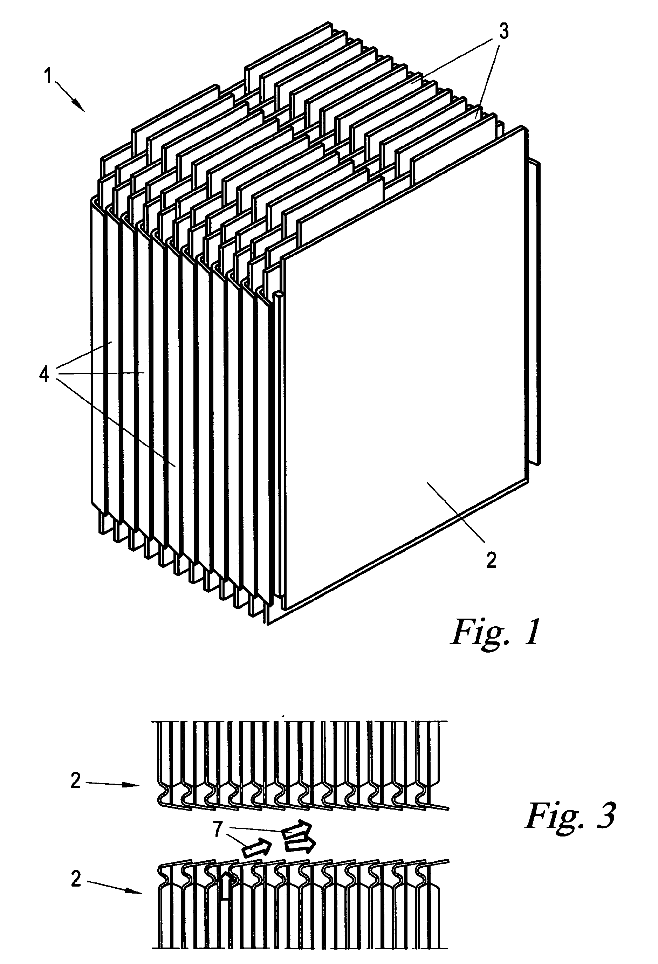

Fig. 1 zeigt eine Batterieeinheit 1 mit einem Stapel 2 von flachen Zellen 3, zwischen denen Kühlbleche 4 liegen. Die Zellen 3 sind beispielsweise Lithiumionenzellen, die in einer Kunststoff-Schweißfolie eingeschweißt und mit entsprechenden elektrischen Anschlüssen versehen sind.

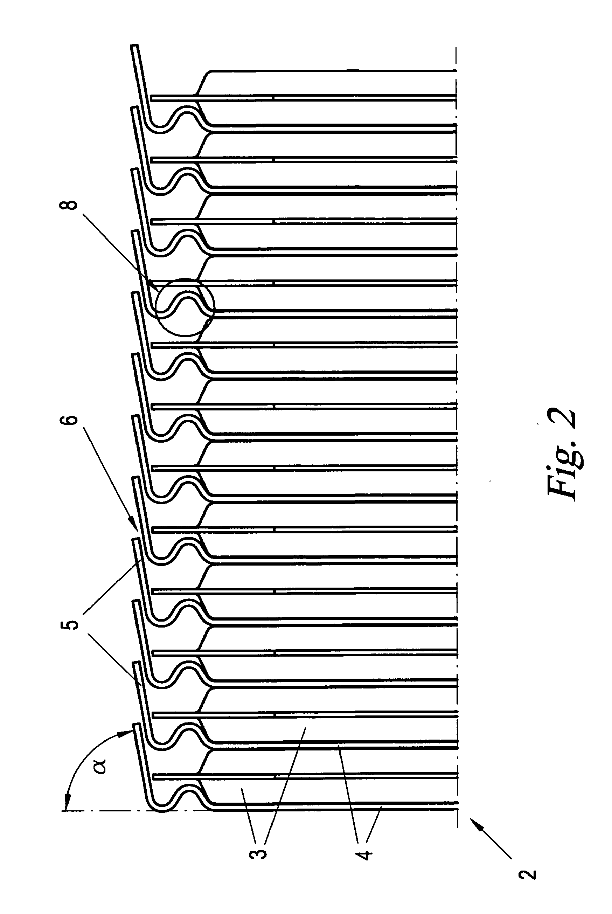

Gemäß Fig. 2 weisen die Kühlbleche 4 jeweils einen abgewinkelten Rand 5 auf. Die Ränder 5 benachbarter Kühlbleche 4 sind in dieselbe Richtung und einander teilweise überlappend abgewinkelt. Dadurch bilden die Ränder 5 im Überlappungsbereich Düsenspalte 6, welche allfällige aus den Zellen 3 austretende Gase oder Flammen zur Seite hin umlenken, d.h. sowohl von den benachbarten Zellen als auch von allfällig gegenüberliegenden Zellen 3 weg, siehe Pfeile 7 in Fig. 3.

Der Winkel α der Abwinkelung der Ränder 5 ist bevorzugt größer gleich 45°, jedoch jedenfalls kleiner als 90°, um die Düsenspalte 6 zu bilden. Bevorzugt liegt der Winkel α zwischen 70° und 85°, besonders bevorzugt bei etwa 80°.

In einem an ihren Rand 5 unmittelbar anschließenden Bereich 8 sind die Kühlbleche 4 gewellt, um die daran anliegenden Zellen 3 gegen ein Verrutschen zum Rand 5 hin zu sichern.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Batterieeinheit (1) mit einem Stapel (2) flacher Zellen (3), zwischen denen Kühlbleche (4) liegen, die zumindest einen abgewinkelten Rand (5) aufweisen, **dadurch gekennzeichnet, daß** die Ränder (5) benachbarter Kühlbleche (4) in dieselbe Richtung und einander teilweise überlappend abgewinkelt sind, um zwischeneinander in diese Richtung gerichtete Düsenspalte (6) zu bilden.

2. Batterieeinheit nach Anspruch 1, **dadurch gekennzeichnet, daß** der Winkel (α) der Abwinkelung größer gleich 45° und kleiner als 90° ist, bevorzugt etwa 70° bis 85°.

3. Batterieeinheit nach Anspruch 1 oder 2 mit zumindest zwei benachbarten Stapeln, **dadurch gekennzeichnet, daß** einander in der Batterieeinheit (1) gegenüberliegende Ränder (5) etwa in dieselbe Richtung abgewinkelt sind.

4. Batterieeinheit nach einem der Ansprüche 1 bis 3, **dadurch gekennzeichnet, daß** die Kühlbleche (4) in dem an ihren Rand (5) anschließenden Bereich (8) gewellt sind, um die am Kühlblech (4) anliegende Zelle (3) gegen ein Verrutschen zum Rand (5) hin zu sichern.

## Claims

1. Battery unit (1) comprising a stack (2) of flat cells (3) between which there are situated cooling plates (4) which have at least one angled edge (5), **characterized in that** the edges (5) of adjacent cooling plates (4) are angled in the same direction and partially overlapping one another in order to form between one another nozzle gaps (6) which are directed in this direction.

2. Battery unit according to Claim 1, **characterized in that** the angle (α) of the angled portion is greater than or equal to 45° and less than 90°, preferably about 70° to 85°.

3. Battery unit according to Claim 1 or 2 comprising at least two adjacent stacks, **characterized in that** edges (5) which are opposite one another in the battery unit (1) are angled approximately in the same direction.

4. Battery unit according to one of Claims 1 to 3, **characterized in that** the cooling plates (4) are corrugated in the region (8) adjoining their edge (5) in order to secure the cell (3) bearing against the cooling plate (4) against slipping towards the edge (5).

## Revendications

1. Unité de batterie (1) comprenant un empilement (2) de cellules plates (3) entre lesquelles sont disposées des tôles de refroidissement (4) qui présentent au moins un bord coudé (5), **caractérisée en ce que** les bords (5) de tôles de refroidissement adjacentes (4) sont coudés dans la même direction et de manière à se chevaucher en partie, afin de former entre eux des fentes de buse (6) orientées dans cette direction.

2. Unité de batterie selon la revendication 1, **caractérisée en ce que** l'angle (α) du coudage est supérieur ou égal à 45° et inférieur à 90°, de préférence vaut environ 70° à 85°.

3. Unité de batterie selon la revendication 1 ou 2, comprenant au moins deux empilements adjacents, **caractérisée en ce que** des bords (5) mutuellement opposés dans l'unité de batterie (1) sont coudés approximativement dans la même direction.

4. Unité de batterie selon l'une quelconque des revendications 1 à 3, **caractérisée en ce que** les tôles de refroidissement (4) dans la région (8) se raccordant à leur bord (5) sont ondulées, afin de fixer la cellule (3) s'appliquant contre la tôle de refroidissement (4) pour l'empêcher de glisser vers le bord (5).
